# EUROPEAN PATENT APPLICATION

(11) **EP 4 769 975 A1**
(43) Date of publication of application: **01.07.2026**
(21) Application number: 24880940.2
(22) Date of filing: 09.04.2024
(51) Int. Cl.: H04B 10/25, H04J 14/02, H04J 14/04, H04B 10/2581, G06F 15/173

(54) **OPTICAL INPUT AND OUTPUT CHIP AND DISTRIBUTED COMPUTING SYSTEM**

(30) Priority: 23.10.2023 CN 202311368324
(71) Applicant: SILITH TECHNOLOGY PTE. LTD., Singapore 637145 (SG)
(72) Inventor: ZHANG, Xingyu, Shanghai 201210 (CN); CHEN, Yuxuan, Shanghai 201210 (CN); ZHOU, Guangzhu, Shanghai 201210 (CN)
(74) Representative: Bayramoglu et al.
(86) International application number: PCT/CN2024/086692
(87) International publication number: WO 2025/086555

(57) **Abstract**

An optical input/output chip and distributed computing system, including: output sub-chip includes first light processing module to form N first light branches output from laser source, divide and modulate each first light branch into M first light sub-branches according to M wavelengths, form second optical branches containing N different modes from N modulated first optical branches before being output in first polarization state; input sub-chip includes second optical processing module, to form N third optical branches containing same mode from N second optical branches containing different modes, divide out part of light in each third optical branch having been converted from first polarization state to second, and form first polarization state again, combine and demodulate light in the first polarization state without conversion in original third optical branch after having been divided into M second optical sub-branches according to M wavelengths respectively. Thus increasing both communication rate and bandwidth effectively.

## Description

The present application claims the priority of Chinese Patent Application No. 202311368324.6, filed on Oct 23, 2023, entitled "Optical input/output chip and distributed computing system". The contents of the above application are incorporated herein by reference.

### FIELD OF THE APPLICATION

The present application relates to the technical field of optoelectronics, and in particular to an optical high-speed optical input/output (I/O) chip based on mode division multiplexing (MDM) and/or wavelength division multiplexing (WDM) and a distributed computing system using the same.

### BACKGROUND

High-speed input/output (I/O) is applied to a plurality of technologies and interfaces in a computer and a communication system for a high-speed data transmission, in order to provide a higher data transmission rate, a lower latency, and a larger bandwidth, so as to meet a requirement for modern computing and communication. A high-speed I/O technology plays an important role in a plurality of fields including super computing, artificial intelligence, big data processing, high-performance computing, cloud computing, high-speed communication, virtual reality and more. These applications have proposed a higher requirement for the bandwidth, function of the high-speed I/O and more, while a traditional high-speed electrical input/output (Electrical I/O) technology is facing to a plurality of bottlenecks, and unable to continuously meet a requirement thereof.

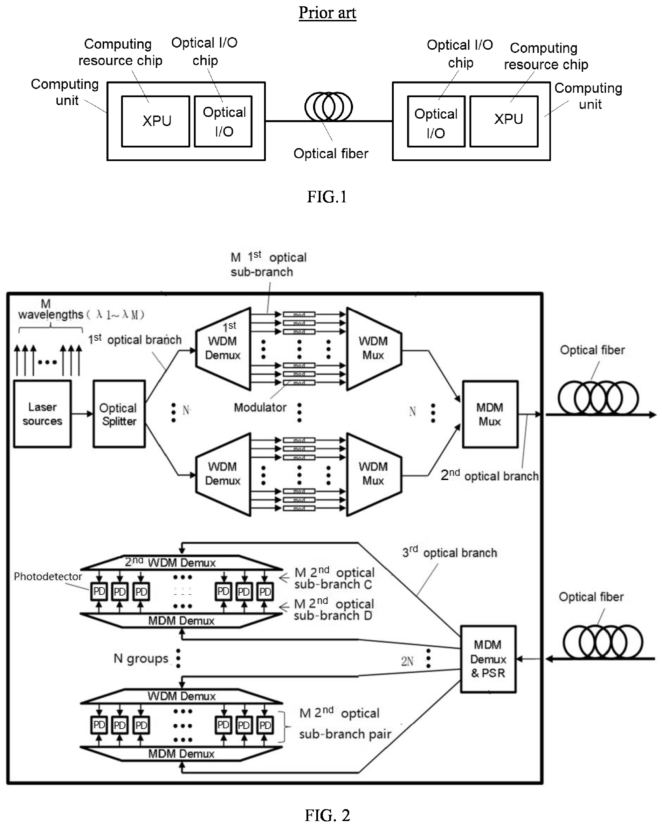

Appearing of an optical high-speed input/output (Optical I/O) technology has provided a potential solution to address the problem hereinabove. The optical I/O is a series of technologies, configured to resolve an I/O port scatter in a plurality of large-capacity chips including a switch chip, a CPU, a GPU and more, through a large bandwidth and a high-density optical interface, solving a problem of chip-to-chip interconnection. Compared with an electrical high-speed I/O technology having been matured in the prior art, the optical I/O is expected to provide a channel density over one hundred times, while each channel is able to provide a bandwidth more than one hundred times, further having a plurality of advantages including low power consumption, low latency and more. For example, in a plurality of applications including a new generation of artificial intelligence (Al), a high-performance computing (HPC), and more, it requires a distributed computing system architecture and a pooling technique for computing resource, thus a high-speed interconnection between a plurality of computing resource chips including CPUs, GPUs, FPGAs, ASICs, and more, will require a protocol of the optical high-speed I/O. FIG. 1 illustrates a schematic diagram on an application of the optical I/O in the prior art, wherein XPU refers to a plurality of computing resource chips including the CPUs, the GPUs, the FPGAs, the ASICs, and more; the optical I/O refers to an optical high-speed I/O chip; two computing units are interconnected through an optical fiber connected between the optical high-speed I/O chips thereof respectively, to achieve a high-speed interconnection between two of the computing resource chips. In the prior art, the optical high-speed I/O technology is adopting WDM (Wavelength Division Multiplexing) as a major protocol, that is, adopting a plurality of wavelengths together to carry a high volume data interconnection. For example, in a protocol, it adopts eight wavelengths, and each wavelength carries data in 32 Gbit/s, thus it is able to carry data of 8 × 32 Gbit/s=256 Gbit/s in total. With an increasing demand for a higher-rate communication in future, a protocol of increasing a total bandwidth by continuously increasing an amount of the wavelengths only, has been subjected to an extreme challenge, while an ever-increasing wavelength data will have a higher requirement for a laser source, and have a higher cost. Therefore, a novel solution is needed urgently to solve such a problem.

### BRIEF SUMMARY OF THE APPLICATION

According to the defects described above, the purpose of the present application aims to provide an optical I/O chip and a distributed computing system.

In order to achieve the abovementioned goals, the technical solution of the present application to solve the technical problems is as follows:
the present application provides an optical I/O chip, comprising: an output sub-chip and an input sub-chip;
the output sub-chip comprises a first optical processing module, configured to enable light containing M wavelengths provided by a laser source to form N first optical branches; and adopt a WDM technology and a mode division multiplexing (an MDM) technology, to enable the light in each of the N first optical branches to be divided according to the M wavelengths, before forming M first optical sub-branches, and performing modulation in each sub-branch; further enable modulated light in the N first optical branches to form a second optical branch containing N different modes, before being output as a first polarization state and entering an optical transmission medium; wherein M ≥ 1 and N ≥ 1;
the input sub-chip comprises a second optical processing module, configured to enable the light in the second optical branch containing the N different modes to form N third optical branches containing a same mode, wherein the light in the second optical branch is output by the output sub-chip and transmitted by the optical transmission medium; and enable a part of light in each of the third optical branches to form the first polarization state again after having been divided, wherein the part of the light has experienced a polarization rotation and been transformed from the first polarization state to a different second polarization state when being transmitted in the optical transmission medium; the part of the light is then combined accordingly with the light in a same third optical branch that is left in the first polarization state without experiencing a polarization rotation, before being demodulated, wherein the light left in the first polarization state has been divided and formed M second optical sub-branches according to the M wavelengths respectively.

Further, the first optical processing module comprises an optical splitter, a first wavelength division multiplexing demultiplexer (a first WDM Demux), a modulator, a wavelength division multiplexing multiplexer (a WDM Mux), and a mode division multiplexing multiplexer (an MDM Mux), wherein the optical splitter is configured to divide a mixed light containing M wavelengths and output from a same laser source into the N first optical branches; each light containing M wavelengths in each of the N first optical branches is divided into the M first optical sub-branches by one of the first WDM Demuxes, light of a single wavelength in each of the M first optical sub-branches is modulated and loaded respectively with a high-speed electrical signal by one of the modulators, before one of the WDM Muxes combines M modulated lights, each having a different wavelength, into one path, thus the light in the N first optical branches are combined into one path by one MDM Mux. During such a process, the MDM Mux converts the light in the N first optical branches into a second optical branch containing the N different modes; and finally, the light containing M wavelengths, N different modes and having the high-speed electrical signal loaded, is transmitted to an input terminal of the input sub-chip from an output terminal of the output sub-chip in the first polarization state through a multimode optical fiber acting as the optical transmission medium, wherein the input sub-chip and the output sub-chip are arranged in a same optical IO chip or different optical IO chips. The light in the first polarization state being transmitted in the multimode optical fiber, due to having experienced the polarization rotation, will have a part in the first polarization state, and another part in the second polarization state, when arriving at the input terminal. The second optical processing module comprises a mode division multiplexing demultiplexer (an MDM Demux), a polarization splitter rotator (a PSR), a second wavelength division multiplexing demultiplexer (a second WDM Demux) and a photodetector; light of N different modes containing both the first polarization state and the second polarization state input by the input terminal, wherein one of the MDM Demuxes and the PSR, converts all of the second optical branches containing the N different modes into N third optical branches, each of the N third optical branches containing a same mode, while in each of the third optical branches, separating the light in the second polarization state out from the light in the first polarization state, before converting into the first polarization state, so as to divide each of the third optical branches into two paths comprising a third optical branch A and a third optical branch B, wherein the third optical branch A comprises the light originally in the first polarization state, and the third optical branch B comprises the light being converted from the second polarization state into the first polarization state. One of the third optical branches A and one of the third optical branches B according to each of the third optical branches are arranged into a same group, N groups together. By one of the second WDM Demuxes, the light containing M wavelengths being contained in the third optical branches A and the third optical branches B in each group, is divided again into M second optical sub-branches respectively, before forming M pairs of the second optical sub-branches correspondingly one by one, according to a same wavelength; while two lights of the same wavelength in each pair of the second optical sub-branch enter two opposite ends of a same photodetector, before being combined together and demodulated into a high-speed electrical signal.

Further, when the modulator is a micro-ring modulator, a micro-disk modulator, a photonic crystal modulator or a Bragg grating modulator, the modulator is further applied as the first WDM Demux and the WDM Mux; and/or, the second WDM Demux is formed by the micro-ring modulator, the micro-disk modulator, the photonic crystal modulator or the Bragg grating modulator.

Further, when N=1, in another embodiment, there is none of the optical splitter, the MDM Mux, and the MDM Demux arranged, also the multimode optical fiber is substituted by a single-mode optical fiber; while there are only one of the MDM Mux and only one of the first WDM Demux arranged; after the light output by the laser source is input directly into the first WDM Demux, and output by the WDM Mux, through the single-mode optical fiber, the light is then transmitted from the output terminal of the output sub-chip to an input terminal of the input optical sub-chip on another optical I/O chip, or on a same optical I/O chip, and enters directly into the PSR.

Further, when M=1, in another embodiment, there is none of the first WDM Demux, the WDM Mux, and the second WDM Demux arranged; the N first optical branches split by the optical splitter, after each having been modulated directly by one of the modulators, enter directly into the MDM Mux for a mode conversion; and only two of the lights in the first polarization state and having a same wavelength in each group of the third optical branches, being converted and formed by the MDM Demux and the PSR, enter directly into two opposite ends of a corresponding one of the photodetectors.

Further, the output sub-chip and the input sub-chip are arranged on a same piece of the optical I/O chip, or, the output sub-chip and the input sub-chip are arranged on two different pieces of the optical I/O chips respectively; and/or, the output sub-chip and the input sub-chip are connected by an optical fiber, an optical waveguide, or a photonic wire bonding in between, acting as the optical transmission medium; and/or, the first optical branch up to the third optical branch, the first optical sub-branch, and the second optical sub-branch are all formed on a waveguide.

Further, the first polarization state comprises a TE polarization state, the second polarization state comprises a TM polarization state; and/or, the N different modes comprise a first order mode up to an N-th order mode; the second optical processing module is configured to convert the second optical branch containing the N different modes and being output by the output sub-chip into the N third optical branch having a first-order mode.

Further, the laser source is formed by packaging together a plurality of sub-laser sources providing different wavelengths respectively, or the laser source is formed by a same laser source generating lights of different wavelengths; and/or, the laser source is arranged inside the optical I/O chip, or arranged externally outside the optical I/O chip and sending light into the optical I/O chip in a way of optical coupling; and/or, the modulator comprises a Mach-Zehnder interferometer modulator, a Michelson interferometer modulator, a directional coupler modulator, a germanium/silicon absorption modulator, a micro-ring modulator, a micro-disk modulator, a photonic crystal modulator or a Bragg grating modulator; and/or, the optical splitter comprises a Y-shaped branch, a trident shaped branch, a multimode interference coupler, a directional coupler, an adiabatic coupler, a bent coupler, a photonic crystal splitter or a sub-wavelength splitter; and/or, the first WDM Demux, the WDM Mux, or the second WDM Demux comprise an arrayed waveguide grating, an echelle grating, a plurality of Mach-Zehnder interferometers connected in a cascade fashion, a plurality of micro-rings connected in a cascade fashion, a plurality of Mach-Zehnder interferometers and a plurality of micro-rings connected in a cascade fashion, or a Fabry-Perot interferometer; and/or, the MDM Mux or the MDM Demux comprises a multimode interference coupler, a multimode adiabatic coupler, a bent coupler, a contra-directional coupler, a multi-waveguide coupling structure, an irregular multimode structure, a grating structure, a photonic crystal structure or a sub-wavelength structure; and/or, the PSR comprises a double-layer taper-shaped structure, a dual material structure, a bent structure, a multimode interference structure, or an adiabatic structure; and/or, the photodetector comprises a PIN diode, a metal-semiconductor-metal photodetector, or an avalanche photodiode; and/or, the MDM Demux and the PSR implement respective functions thereof in two independent structures, or implementing respective functions thereof by being integrated into a same structure.

The present application further provides a distributed computing system comprising the optical I/O chip stated above.

Further, the distributed computing system comprises a computing resource pool, a flash memory resource pool, and a storage resource pool arranged on a substrate; the computing resource pool comprises a plurality of computing units arranged in a first array, each of the computing units comprises a first laser source, a first photonic integrated circuit chip, a first electronic integrated circuit chip, and a computing resource chip; the flash memory resource pool comprises a plurality of flash memory cells arranged in a second array, each of the flash memory cells comprises a second laser source, a second photonic integrated circuit chip, a second electronic integrated circuit chip, and a flash memory resource chip; the storage resource pool comprises a plurality of storage units arranged in a third array, each of the storage units comprises a third laser source, a third photonic integrated circuit chip, a third electric integrated circuit chip, and a storage resource chip; each of the first photonic integrated circuit chip, the second photonic integrated circuit chip, and the third photonic integrated circuit chip has one of the optical I/O chip arranged respectively; the first photonic integrated circuit chip, the second photonic integrated circuit chip, and the third photonic integrated circuit chip, connected by an optical fiber, an optical waveguide, or a photonic wire bonding in between, and acting as the optical transmission medium, , are achieving an optical interconnection between the computing units, the flash memory units, and the storage units.

It can be seen from the technical solutions stated above that, the present application, by adopting the WDM technology and the MDM technology on the optical I/O chip, and performing a modulation and demodulation process to the light emitted by the laser source, is able to increase effectively a communication rate of the optical I/O chip, further increase and expand the bandwidth of the optical I/O chip, thus having a plurality of advantages including a high channel density, a low power consumption, a low latency and more. Further, for the output sub-chip, when adopting a modulator having a wavelength selection function, comprising a micro-ring modulator, a micro-disk modulator, a photonic crystal modulator, or a Bragg grating modulator, and more, it is further possible to omit the first WDM Demux and the WDM Mux; and for the input sub-chip, it is possible to adopt the modulator having the wavelength selection function to replace the second WDM Demux, which can not only save a space on the chip, but also achieve a miniaturization and a high bandwidth density of the chip by using a characteristic thereof that a size of the modulator itself is small. A distributed computing system with the optical I/O chip disclosed by the present application, by an advantage of an optical I/O of the optical I/O chip in the present application, achieves the optical interconnection between each chip in a system, so as to improve effectively an interconnection bandwidth, increase the channel density, reduce the power consumption, and improve the latency.

### BRIEF DESCRIPTION OF THE DRAWINGS

FIG. 1 illustrates a schematic diagram on an optical I/O application in the prior art;
FIG. 2- FIG. 6 illustrate schematic structural diagrams on an optical I/O chip according to a preferred embodiment of the present application;
FIG. 7 illustrates a schematic structural diagram on an optical interconnection when an output sub-chip and an input sub-chip are arranged on two different optical I/O chips respectively according to a preferred embodiment of the present application;
FIG. 8 illustrates a schematic structural diagram on an optical interconnection when an output sub-chip and an input sub-chip are arranged on a same optical I/O chip according to a preferred embodiment of the present application;
FIG. 9 illustrates a conceptual diagram on distributed computing system architecture according to a preferred embodiment of the present application.

### DETAILED DESCRIPTION OF THE EMBODIMENTS

In order to make the purpose, technical solution and advantages of the present application clearer and more explicit, further detailed descriptions of the present application are stated here, referencing to the attached drawings and some embodiments of the present application. Obviously, the described embodiments are part of, but not all of, the embodiments of the present application. Based on the embodiments of the present application, all other embodiments obtained by those of ordinary skills in the art without any creative work are included in the scope of protection of the present application. Unless otherwise defined, technical or scientific terms used herein should have the meanings usually understood by those of ordinary skills in the art to which the present application belongs. As used herein, the terms "comprise" and the like are intended to mean that an element or item appearing before the term encompasses elements or items appearing after the term and the equivalents thereof, instead of excluding other elements or items.

The present application provides an optical I/O chip, comprising: an output sub-chip and an input sub-chip;
the output sub-chip comprises a first optical processing module, configured to enable light containing M wavelengths provided by a laser source to form N first optical branches, and by adopting a WDM technology and an MDM technology, enabling the light in each of the N first optical branches to form M first optical sub-branches after been divided according to the M wavelengths, and further performing modulation in each sub-branch; modulated light in the N first optical branches is then enabled to form a second optical branch containing N different modes before being output in a first polarization state and entering an optical transmission medium; wherein M ≥ 1 and N ≥ 1;
the input sub-chip comprises a second optical processing module, configured to enable the light in the second optical branch containing N different modes to form N third optical branches containing a same mode, wherein the light in the second optical branch is output by the output sub-chip and transmitted by the optical transmission medium; and enable a part of the light in each of the third optical branches to form the first polarization state again after having been divided, wherein the part of the light has experienced a polarization rotation and been transformed from the first polarization state to a different second polarization state during being transmitted in the optical transmission medium; the part of the light combines one by one with light in a same third optical branch left in the first polarization state without experiencing the polarization rotation, before being demodulated, wherein the light left in the first polarization has been divided and formed M second optical sub-branches according to the M wavelengths respectively.

The present application, by adopting the WDM technology and the MDM technology on an optical I/O chip, and performing a modulation and demodulation process to the light emitted by the laser source, is able to increase effectively a communication rate of the optical I/O chip, further increase and expand a bandwidth of the optical I/O chip, thus having a plurality of advantages including a high channel density, a low power consumption, a low latency and more.

An innovative point of the present application is that, the technical scheme disclosed can be compatible with an existing WDM scheme

A distributed computing system with the optical I/O chip disclosed by the present application, by an advantage of an optical high-speed input and output of the optical I/O chip disclosed by the present application, achieves an optical interconnection between each chip in a system, so as to improve effectively an interconnection bandwidth, increase the channel density, reduce the power consumption, and improve the latency.

Specific embodiments of the present application are further described in detail below with reference to the accompanying drawings.

Referencing to FIG. 2, the optical I/O chip disclosed by the present application comprises an output sub-chip arranged at an upper portion of the optical I/O chip, acting as a transmitter, and an input sub-chip arranged at a lower portion, acting as a receiver. Wherein the output sub-chip comprises the first optical processing module, and the input sub-chip comprises the second optical processing module.

The first optical processing module comprises an optical splitter, a first wavelength division multiplexing demultiplexer (a first WDM Demux), a modulator, a wavelength division multiplexing multiplexer (a WDM Mux), and a mode division multiplexing multiplexer (an MDM Mux). The output sub-chip has a plurality of laser sources arranged, and the laser sources supply a light, a mixed light, containing M wavelengths (λ1~λM) to an optical splitter, in an embodiment, the light containing M different wavelengths (λ1~λM) is shown schematically at a laser source in FIG. 2, but is not limited thereto. The optical splitter divides the light output from the laser sources into N first optical branches, while a number of the first optical branches could be any one number, in an embodiment, the number matches that of a plurality of possible light splitting modes. Each of the N first optical branches comprises the light containing M different wavelengths.

The light containing M wavelengths in each of the N first optical branches is divided by a first WDM Demux into M first optical sub-branches according to the M wavelengths. In an embodiment, the M first optical sub-branches are corresponding to the M wavelengths stated above, and each of the M first optical sub-branches contains one light of single wavelength, while each wavelength of the light in the M first optical sub-branches is different to each other. That is, there are N first WDM Demuxes arranged, thus there are M×N first optical sub-branches totally. The light of single wavelength in each of the M first optical sub-branches is modulated by a modulator to load a high-speed electric signal. Thus there are totally M×N modulators arranged. Then one of the WDM Muxes combines M modulated lights, each having a different wavelength in each of the M first optical sub-branches into one path. That is, there are N WDM Muxes arranged. In this way, the light containing the M wavelengths having been divided in each of the N first optical branches is combined again by the WDM Mux, before forming light containing the M wavelengths, that is, the mixed light.

Finally, the light in the N first optical branches is combined into one path through an MDM Mux. In such a process, the MDM Mux converts the light in the N first optical branches into a second optical branch containing N different modes, that is, the light in each of the N first optical branches is converted into light having a different mode from other lights in the first optical branch, such as being converted into light of a first-order mode, light of a second order mode,......, up to light of an N-th order mode, so as to form a second optical branch containing N different modes. By forming the second optical branch on the waveguide, it is possible to carry light of multi-order modes. In an embodiment, if N equals to three, after performing a mode conversion, the light in the first optical branches will be converted into light of a first order mode, light of a second order mode and light of a third order mode, before forming a second optical branch containing three different modes; and if N equals to two, after performing the mode conversion, the light in the first optical branches will be converted into light of a first order mode, and light of a second order mode, before forming a second optical branch containing two different modes; and in an extreme case, if N equals to one, after performing the mode conversion, the light in the first optical branches will be converted into light in a second optical branch containing one mode only;

At last, the light containing the M wavelengths and the N different modes and having the high-speed electrical signal loaded, is transmitted to an output terminal of the output sub-chip arranged in another optical I/O chip (or a same optical I/O chip), before entering an optical fiber acting as the optical transmission medium in the first polarization state at the output terminal of the output sub-chip. In an embodiment, the light is transmitted to an input terminal of the input sub-chip through a multimode optical fiber in the TE polarization state.

As a common sense in the field, although the light emitted from the laser sources is in the TE polarization state, and keeps in the TE polarization state until being sent out from the output terminal of the output sub-chip, when the light is transmitted in the optical fiber, the polarization state thereof may have a turning happen, thus when the light arrives at a receiving end (the input terminal) of the input sub-chip, a part of the light will be in the TE polarization state, while another part of the light will be in a TM polarization state (the second polarization state), thus requiring a separation process.

The second optical processing module comprises a mode division multiplexing demultiplexer (MDM Demux), a polarization splitter rotator (PSR), a second wavelength division multiplexing demultiplexer (a second WDM Demux), and a photodetector (a PD). The light containing the TE polarization state and the TM polarization state, being transmitted to the input terminal from the output terminal of the output sub-chip through the optical fiber, has N different modes and two different polarization states (the TE polarization state and the TM polarization state) divided and converted by the MEM Demux and the PSR.

Wherein the MDM Demux converts all of the second optical branches containing N different modes into N third optical branches containing a same mode, for example, converts all into N third optical branches containing a same first-order mode. The PSR divides light contained in each of the third optical branches formed by turning the TE polarization state into different TM polarization states during an optical fiber transmission process, from the light in the TE polarization state, and converts the light in the TM polarization state back into the light in the TE polarization state, thus each original third optical branch is divided into two paths, represented by a third optical branch A and a third optical branch B, so the third optical branches after been divided will have a total number of 2N, that is, N of the third optical branches A and N of the third optical branches B; then arranging light originally in the TE polarization state, that is, a new third optical branch A of the first order mode having been divided, and light being converted from the TM polarization state to the TE polarization state, that is, another new third optical branch B of the first order mode having been divided, located in a same original third optical branch, that is, an original third optical branch before being divided into two paths, into one group, totally N groups; a second WDM Demux divides the light of M wavelengths, that is, the mixed light, contained in the third optical branches A and the third optical branches B respectively in a same group, into M second optical sub-branches respectively according to the different M wavelengths again, represented by a second optical sub-branch C and a second optical sub-branch D, thus the second WDM Demux has a total number of 2N or N pairs; and each of M second optical sub-branches C and each of M second optical sub-branches D contains a light of a single wavelength respectively. The light in the M second optical sub-branches C has a wavelength different to each other, and the light in the M second optical sub-branches D has a wavelength different to each other, while the M second optical sub-branches C and the M second optical sub-branches D are arranged correspondingly according to a same wavelength one by one, before forming M pairs of the second optical sub-branches. That is, two lights of single wavelength in each pair of the second optical sub-branches have a same wavelength, wherein each pair of the second optical sub-branches comprises a second optical sub-branch C and a second optical sub-branch D having a same wavelength, and the two lights of single wavelength contain a light originally in the TE polarization state, and another light being converted from the TM polarization state to the TE polarization state. The two lights of the same wavelength in each pair of the second optical sub-branches enter an upper end and a lower end of a same photodetector respectively, shown as FIG. 2, that is, entering two opposite ends of a photon absorption area of a same photodetector, before being combined together and demodulated into a high-speed electric signal, thus it is possible to avoid effectively the photodetector from being saturated or damaged under a high light intensity incidence, while being able to reduce a channel distortion caused by a polarization mode dispersion (PMD), further having a plurality of beneficial effects including increasing a communication rate and a channel density, reducing a power consumption, and improving a latency. Thus, M x N photodetectors will be required.

An architecture of the optical I/O chip in the embodiment shown in FIG. 2, has adopted both technologies of MDM and WDM simultaneously, and there are M × N modulators and M × N photodetectors arranged, if a modulation rate of each modulator or photodetector is K Gbit/s, then a total communication bandwidth will be M × N × K Gbit/s. Thus, the embodiments of the present application stated above, compared to a scheme of adopting a WDM only, have increased the communication rate N more times, that is, the MDM has provided another dimension for expanding the communication bandwidth. Therefore, the present application has further increased and expanded the bandwidth of the optical I/O chip, while also having a plurality of advantages including the high channel density, the low power consumption, the low latency and more. At a same time, it can be seen that the present application, when adopting both technologies of MDM and WDM, further has an advantage of being compatible with an existing scheme of WDM in the prior art.

An implementation of the modulators stated above comprises a Mach-Zehnder interferometer modulator, a Michelson interferometer modulator, a directional coupler modulator, a germanium/silicon absorption modulator, a micro-ring modulator, a micro-disk modulator, a photonic crystal modulator, a Bragg grating modulator, and more.

A plurality of modulators themselves has a function of wavelength selection (including the micro-ring modulator, the micro-disk modulator, the photonic crystal modulator, the Bragg grating modulator, and more.). Thus when adopting these modulators, the architecture of the optical I/O chip shown as FIG. 2, both the WDM Mux and the WDM Demux are possible to be omitted. When adopting a method of splitting a mixed light of multiple wavelengths emitted by a same laser source to obtain multiple lights of single wavelength, and together with the micro-ring modulators, the micro-disk modulators, the photonic crystal modulators, or the Bragg grating modulators, it is possible to further omit the WDM Muxes and the WDM Demuxes, according to a characteristic of the wavelength selection function owned by these modulators. Also since all wavelengths have a consistent spacing in between and a same temperature drift, a plurality of methods of wavelength locking and feedback control to these modulators are further simplified.

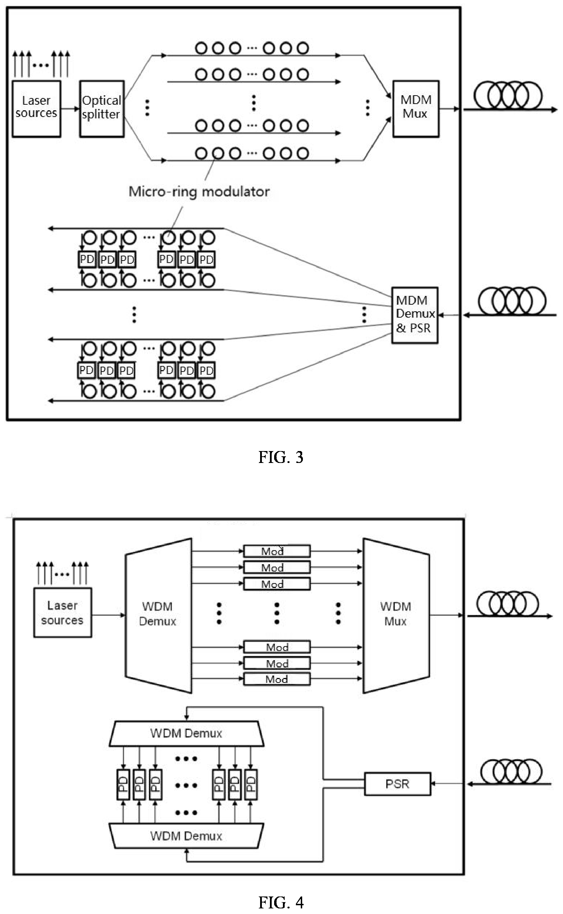

FIG. 3 illustrates another architecture of the present application, when the modulator adopts the micro-ring modulator, the micro-disk modulator, the photonic crystal modulator, or the Bragg grating modulator, at an emitting terminal, the modulator works as a high-speed modulator, as well as the first WDM Demux and the WDM Mux, thus there is no first WDM Demux or WDM Mux arranged. Further, at a receiver portion, a plurality of the modulators, including the micro-ring modulator, the micro-disk modulator, the photonic crystal modulator, and the Bragg grating modulator, can work as a second WDM Demux, thus no WDM Demux is arranged. In an embodiment, shown as FIG. 3, the modulator is adopting a micro-ring modulator, and the micro-ring modulator is also applied as the second WDM Demux to dividing different wavelengths, and sending light of the different wavelengths to each photodetector. Such an architectural form, due to omitting the WDM Mux and the WDM Demux, has saved a space on the chip. Further, since a size of the modulator itself is relatively small, it helps to achieve both miniaturization and high bandwidth density of the chip. For other aspects of the architecture, it can be understood by referring to the description of the embodiments of FIG. 2 stated above, thus no more details are described herein again.

In a plurality of embodiments, it is possible to further simply the architecture stated above into a solution containing the WDM Mux or the MDM Mux only, according to a requirement.

Referencing to FIG. 4, which illustrates a structural form containing the WDM Mux only, that is, N=1, and the optical I/O chip has none of the optical splitter, the MDM Mux, and the MEM Demux arranged. Further the multimode optical fiber may also be replaced by a single-mode optical fiber. In such an architecture, the light output from the laser source is input directly into only one of the first WDM Demuxes arranged. After being output by only one of the WDM Muxes, the light is transmitted to an input terminal of an input sub-chip arranged on another optical I/O chip or a same optical I/O chip through the single-mode optical fiber from an output terminal of the output sub-chip, before entering the PSR directly. For a plurality of other aspects of the present architecture, it can be understood by referring to the description of the embodiment of FIG. 2, thus no more details are described herein.

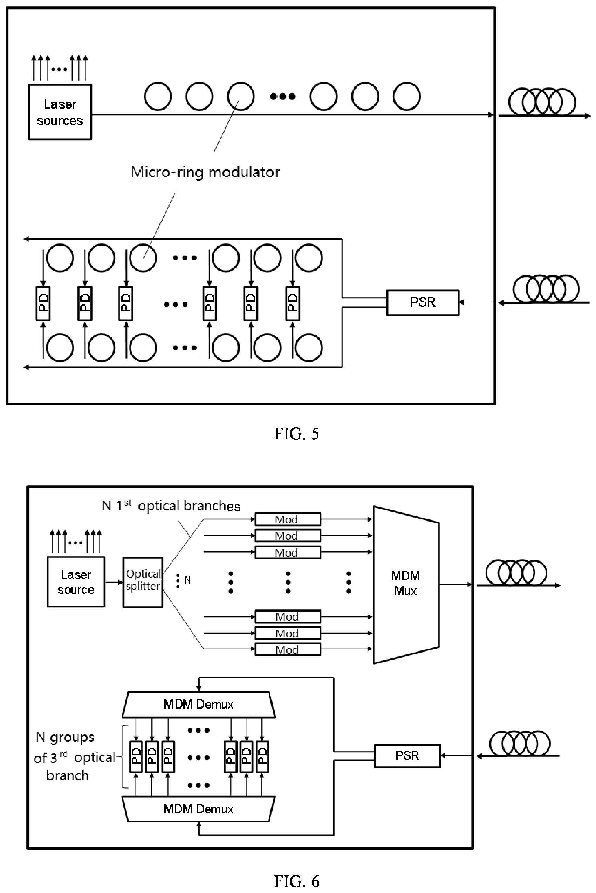

Referencing to FIG. 5, further, when the modulator in the embodiment of FIG. 4 also adopts one of the micro-ring modulator, the micro-disk modulator, the photonic crystal modulator, or the Bragg grating modulator in a same way, for example, adopting the micro-ring modulator as shown in FIG. 5, these modulators are multiplexed simultaneously as a first WDM Demux and a WDM Mux. Further, the second WDM Demux may also be formed by the micro-ring modulator, the micro-disk modulator, the photonic crystal modulator, or the Bragg grating modulator. In an embodiment, shown as FIG. 5, the micro-ring modulator is adopted as the second WDM Demux. Therefore a space in the chip is saved, facilitating the chip to achieve miniaturization and a high bandwidth density.

Referencing to FIG. 6, which illustrates a structural form containing the MDM Mux only, that is, M = 1. The optical I/O chip will have none of the first WDM Demux, the WDM Mux or the second WDM Demux arranged, while the laser source has to provide one wavelength only. In such an architecture, the N first optical branches divided by the optical splitter, after having been modulated directly by one modulator respectively, enter the MDM Mux directly for a mode conversion, in an embodiment, the light of the N first optical branches are converted as a light of a first mode, a light of a second mode, ......, up to a light of an N-th mode, that is, forming a second optical branch containing N different modes. While N groups of the third optical branches, being transmitted to the MDM Demux and the PSR through the multimode optical fiber before being transformed, are all lightes of the first-order mode, and able to be carried by N waveguides respectively. The N groups of the third optical branches, wherein two third optical branches in each group of the third optical branches, that is, a third optical branch A and a third optical branch B, each has one light only, both lights are in the TE polarization state and having a same wavelength, wherein one light is originally in the TE polarization state and another light is converted to the TE polarization state from the TM polarization state, while the two lights in the TE polarization state and having the same wavelength enter two ends of a corresponding photodetector directly. Thus only N photodetectors are arranged for the N groups of the third optical branches.

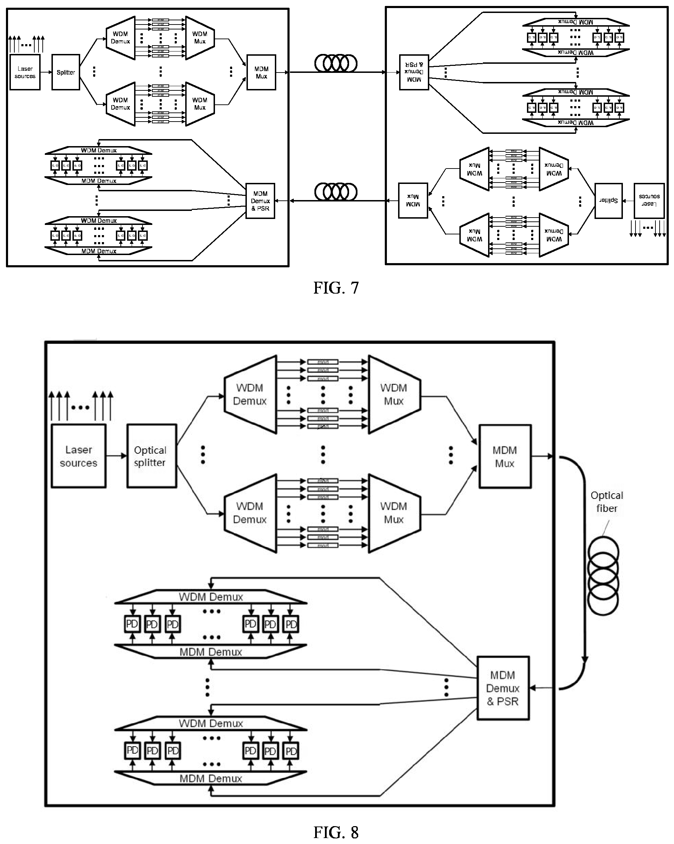

Referencing to FIG. 7, in a real application, a signal sent by a transmitter in one chip is usually received by a receiver in another chip, so as to realize an interconnection between different chips, that is, the output sub-chip and the input sub-chip are arranged respectively in two different optical I/O chips. The embodiments of FIG. 2 to FIG. 6 stated above have demonstrated an application scenario illustrated in FIG. 7. However, it can be understood that it is also possible to adopt a same chip in a self-sending and self-receiving manner, that is, being demonstrated as a case of both the output sub-chip and the input sub-chip arranged in a same optical I/O chip, shown as FIG. 8.

In a plurality of embodiments, the output sub-chip and the input sub-chip are connected by an optical waveguide, or a photonic wire bonding, in addition to the optical fiber.

In a plurality of embodiments, the first optical branch up to the third optical branch, the first optical sub-branch, and the second optical sub-branch are all formed on a waveguide, that is, the waveguide is applied as a carrier of these optical paths, forming an optical path connected by the waveguide between the laser source, the optical splitter, the first WDM Demux, the modulator, the WDM Mux, the MDM Mux in a portion of the transmitter, and the output terminal of the output sub-chip, also forming an optical path connected by the waveguide between the input terminal of the input sub-chip, a Demux, the PSR, the second WDM Demux and the photodetector in a portion of the receiver.

In a plurality of embodiments, an implementation of the laser source capable of providing the light of multiple wavelengths, may be formed by packaging a plurality of sub-laser sources providing different wavelengths together, or may be formed by a same laser source generating lights of different wavelengths, such as a Kerr frequency comb light source. Further, the laser source may be integrated inside the optical I/O chip, or arranged externally outside the optical I/O chip while sending light to the optical I/O chip in a way of optical coupling.

In a plurality of embodiments, an implementation of the optical splitter comprises a Y-shaped branch, a trident shaped branch, a multimode interference coupler, a directional coupler, an adiabatic coupler, a bent coupler, a photonic crystal splitter, a sub-wavelength splitter, and more.

In a plurality of embodiments, an implementation of the first WDM Demux, the WDM Mux, and the second WDM Demux comprises an arrayed waveguide grating, an echelle grating, a plurality of Mach-Zehnder interferometers connected in a cascade fashion, a plurality of micro-rings connected in a cascade fashion, a plurality of Mach-Zehnder interferometers and a plurality of micro-rings connected in a cascade fashion, or a Fabry-Perot interferometer. And, the first WDM Demux, the WDM Mux, and the second WDM Demux may be passive or adjustable.

In a plurality of embodiments, an implementation of the MDM Mux or the MDM Demux comprises a multimode interference coupler, a multimode adiabatic coupler, a bent coupler/contra-directional coupler, a multi-waveguide coupling structure, an irregular multimode structure, a grating structure, a photonic crystal structure and a sub-wavelength structure.

In a plurality of embodiments, an implementation of the PSR comprises a double-layer taper-shaped structure, a dual material structure, a bending structure, a multimode interference structure, an adiabatic structure, and more.

In a plurality of embodiments, the MDM Demux and the PSR stated above may be integrated in a same structure to implement functions thereof respectively, shown as FIG. 2 and FIG. 3. Or, the MDM Demux and the PSR stated above may be integrated in two independent structures to implement functions thereof respectively.

In a plurality of embodiments, the photodetector stated above may be formed based on a plurality of different principles, such as a PIN diode, a metal-semiconductor-metal photodetector, an avalanche photodiode, and more. A direction of a junction of the diodes may be horizontal, or vertical. And the junction of the diodes may also be made into a complicated shape, including an L shape, a U shape, and more.

The multimode fiber stated above comprises a conventional multimode fiber, a rectangular core multimode fiber, a polygonal core multimode fiber, a polarization maintaining fiber, a graded index fiber, a multi-core fiber, a hollow fiber, a photonic crystal fiber, and more.

A distributed computing system disclosed by the present application is further described in detail below with reference to the accompanying drawings.

The distributed computing system disclosed by the present application comprises the optical I/O chip stated above.

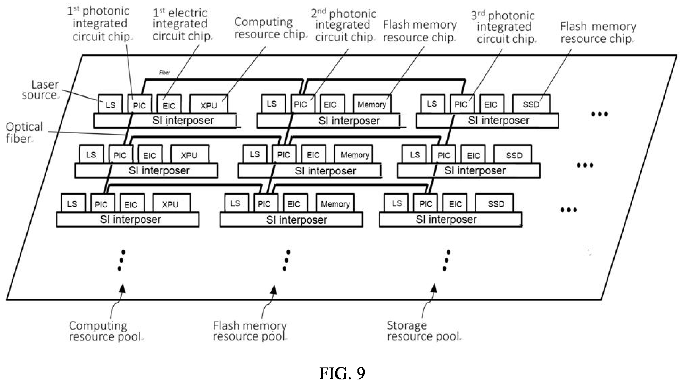

Referencing to FIG. 9, taking an application of the optical I/O chip disclosed by the present application in an architecture of a distributed computing system as an embodiment, wherein the distributed computing system comprises a computing resource pool, a flash memory resource pool, and a storage resource pool arranged on a substrate; the substrate may be a Si interposer.

Wherein, the computing resource pool comprises a plurality of computing units arranged in a first array, each of the computing units comprises a first laser source (LS), a first photonic integrated circuit chip (PIC), a first electronic integrated circuit chip (EIC) as in the prior art, and a computing resource chip (XPU), such as CPUs, GPUs, FPGAs, ASICs, and more; the EIC comprises a driver, a TIA and more.

The flash memory resource pool comprises a plurality of flash memory cells arranged in a second array; each of the flash memory cells comprises a second laser source (LS), a second photonic integrated circuit chip (PIC), a second electronic integrated circuit chip (EIC), and a flash memory resource chip (Memory).

The storage resource pool comprises a plurality of storage units arranged in a third array, each of the storage units comprises a third laser source (LS), a third photonic integrated circuit chip (PIC), a third electric integrated circuit chip (EIC), and a storage resource chip (SSD). In an embodiment shown in FIG. 9, positions of each LS and each of the second EICs in three arrays of the computing resource pool, the flash memory resource pool, and the storage resource pool, are corresponding to each other; positions of each first PIC, each second PIC, and each third PIC are corresponding to each other; positions of each of the XPUs, each of the Memories, and each of the SSDs are corresponding to each other, and more.

From the first PIC to the third PIC, there are the optical I/O chips arranged respectively; the first PIC, the second PIC, and the third PIC achieve the photonic interconnection between the computing units through a plurality of optical fibers or waveguides acting as the photonic transmission media, or a photonic wire bonding, being connected respectively between the optical input chips and the optical output chips, so as to realize the optical interconnection between a plurality of chips of the computing unit, the flash memory unit and the storage unit, thereby improving effectively an interconnection bandwidth, increasing the channel density, reducing the power consumption, and improving the latency.

It may be understood that the array in FIG. 9 is not limited to three rows, that is, there may be more of the computing resource pools, the flash memory resource pools, and the storage resource pools. Further, the array in FIG. 9 is not limited to three columns, that is, the computing resource pool, the flash memory resource pool, and the storage resource pool are not limited to one column respectively, may also be multiple columns each.

An integrated material platform where the distributed computing system architecture stated above is located comprises: silicon, silicon nitride, silicon dioxide, aluminum oxide, indium phosphide, lithium niobate, barium titanate, and a polymer thereof. A type of the waveguide comprises: a channel waveguide, a ridge waveguide, a slot waveguide, a diffusion waveguide, and a photonic crystal waveguide. A range of an operating wavelength of the distributed computing system architecture comprises: a visible light band, an O band, an E band, an S band, a C band, an L band, a U band, and a mid-infrared band. An application field of the distributed computing system architecture comprises optical communication, optical interconnection, free-space optical communication, optical computing, an optical switch, a laser radar, beam control, an optical gyroscope, optical sensing, optical storage, artificial intelligence (AI), autonomous driving, a smart city, and more.

While the embodiments of the present application have been described in detail above, it will be apparent to those skilled in the art that various modifications and variations can be made to the embodiments. It should be understood, however, that such modifications and variations are within the scope and spirit of the present application as set forth in the claims. Moreover, the present application described herein is capable of other embodiments and of being practiced or of being carried out in various ways.

## Claims

1. An optical I/O chip, **characterized by** comprising: an output sub-chip and an input sub-chip;
the output sub-chip comprises a first optical processing module, configured to enable light containing M wavelengths provided by a laser source to form N first optical branches; and adopt a WDM technology and a MDM technology, to enable the light in each of the N first optical branches to be divided according to the M wavelengths, before forming M first optical sub-branches, and performing modulation in each sub-branch; further enable light in the N first optical branches having been modulated to form a second optical branch containing N different modes, before being output in a first polarization state and entering an optical transmission medium; wherein M ≥ 1 and N ≥ 1;
the input sub-chip comprise a second optical processing module, configured to enable the light in the second optical branch containing the N different modes to form N third optical branches containing a same mode, wherein the light in the second optical branch is output by the output sub-chip and transmitted by the optical transmission medium; and enable a part of light in each of the third optical branches to form the first polarization state again after having been divided, wherein the part of the light has experienced a polarization rotation and been transformed from the first polarization state to a different second polarization state when being transmitted in the optical transmission medium; the part of the light is combined one to one accordingly by light in a same third optical branch left in the first polarization state without turning, before being demodulated, wherein the light left in the first polarization state has been divided and formed M second optical sub-branches according to the M wavelengths respectively.

2. The optical I/O chip according to claim 1, **characterized in that** the first optical processing module comprises an optical splitter, a first WDM Demux, a modulator, a WDM Mux, and an MDM Mux, wherein the optical splitter is configured to divid a mixed light containing M wavelengths output from a same laser source into the N first optical branches, the light containing M wavelengths in each of the N first optical branches is divided into the M first optical sub-branches by one of the first WDM Demuxes, light of a single wavelength in each of the M first optical sub-branches is modulated and loaded respectively with a high-speed electrical signal by one of the modulators, before one of the WDM Muxes combines M modulated lights, each having a different wavelength, into one path, thus the light in the N first optical branches are combined into one path by one of the MDM Muxes; during such a process, the MDM Mux converts the light in the N first optical branches into the second optical branch containing the N different modes; and finally, the light containing M wavelengths, N different modes and having the high-speed electrical signal loaded, is transmitted to an input terminal of the input sub-chip from an output terminal of the output sub-chip in the first polarization state through a multimode optical fiber acting as the optical transmission medium, wherein the input sub-chip and the output sub-chip are arranged in a same optical IO chip or different optical IO chips; the light in the first polarization state being transmitted in the multimode optical fiber, due to having experienced the polarization rotation, will have a part of the light in the first polarization state, and another part of the light in the second polarization state, when arriving at the input terminal; the second optical processing module comprises a MDM Demux, a PSR, a second WDM Demux and a photodetector; light of N different modes containing both the first polarization state and the second polarization state input by the input terminal, wherein one of the MDM Demuxes and the PSR, converts all of the second optical branches containing the N different modes into N third optical branches, each of the N third optical branches containing a same mode, while separating the light in the second polarization state in each of the third optical branches out from the light in the first polarization state, before converting into the first polarization state, so as to divide each of the third optical branches into two paths comprising a plurality of third optical branches A and a plurality of third optical branches B, wherein the third optical branches A comprises the light originally in the first polarization state, and the third optical branches B comprises the light being converted from the second polarization state into the first polarization state, followed by arranging one of the third optical branches A and one of the third optical branches B according to each of the third optical branches into a same group, N groups together; by one of the second WDM Demuxes, the light containing M wavelengths being contained in the third optical branches A and the third optical branches B in each group, is divided again into M second optical sub-branches respectively, before forming M pairs of the second optical sub-branches correspondingly one by one, according to a same wavelength; while two lights of the same wavelength in each pair of the second optical sub-branch enter two opposite ends of a same photodetector, before being combined together and demodulated into a high-speed electrical signal.

3. The optical I/O chip according to claim 2, **characterized in that** when the modulator is a micro-ring modulator, a micro-disk modulator, a photonic crystal modulator or a Bragg grating modulator, the modulator is further applied as the first WDM Demux and the WDM Mux; and/or, the second WDM Demux is formed by the micro-ring modulator, the micro-disk modulator, the photonic crystal modulator or the Bragg grating modulator.

4. The optical I/O chip according to claim 2, **characterized in that** when N=1, there is none of the optical splitter, the MDM Mux, and the MDM Demux arranged, also the multimode optical fiber is substituted by a single-mode optical fiber; while there are only one of the MDM Mux and only one of the first WDM Demux arranged; after the light output by the laser source is input directly into the first WDM Demux, and output by the WDM Mux, through the single-mode optical fiber, the light is then transmitted from the output terminal of the output sub-chip to an input terminal of the input optical sub-chip on another optical I/O chip, or on a same optical I/O chip, and enters directly into the PSR.

5. The optical I/O chip according to claim 2, **characterized in that** when M=1, there is none of the first WDM Demux, the WDM Mux, and the second WDM Demux arranged, the N first optical branches split by the optical splitter, after each having been modulated directly by one of the modulators, enter directly into the MDM Mux for a mode conversion; and only two of the lights in the first polarization state and having a same wavelength in each group of the third optical branches, being converted and formed by the MDM Demux and the PSR, enter directly into two opposite ends of a corresponding one of the photodetectors.

6. The optical I/O chip according to claim 1, **characterized in that** the output sub-chip and the input sub-chip are arranged on a same piece of the optical I/O chip, or, the output sub-chip and the input sub-chip are arranged on two different pieces of the optical I/O chip respectively; and/or, the output sub-chip and the input sub-chip are connected by an optical fiber, an optical waveguide, or a photonic wire bonding in between, acting as the optical transmission medium; and/or, the first optical branches up to the third optical branches, the first optical sub-branches, and the second optical sub-branches are all formed on a waveguide.

7. The optical I/O chip according to claim 1, **characterized in that** the first polarization state comprises a TE polarization state, the second polarization state comprises a TM polarization state; and/or, the N different modes comprise a first order mode up to an N-th order mode; the second optical processing module is configured to convert the second optical branch containing the N different modes and being output by the output sub-chip into the N third optical branches having a first-order mode.

8. The optical I/O chip according to claim 2, **characterized in that** the laser source is formed by packaging together a plurality of sub-laser sources providing different wavelengths respectively, or the laser source is formed by a same laser source generating lights of different wavelengths; and/or, the laser source is arranged inside the optical I/O chip, or arranged externally outside the optical I/O chip and sending light into the optical I/O chip in a way of optical coupling; and/or, the modulator comprises a Mach-Zehnder interferometer modulator, a Michelson interferometer modulator, a directional coupler modulator, a germanium/silicon absorption modulator, a micro-ring modulator, a micro-disk modulator, a photonic crystal modulator or a Bragg grating modulator; and/or, the optical splitter comprises a Y-shaped branch, a trident shaped branch, a multimode interference coupler, a directional coupler, an adiabatic coupler, a bent coupler, a photonic crystal splitter or a sub-wavelength splitter; and/or, the first WDM Demux, the WDM Mux, or the second WDM Demux comprise an arrayed waveguide grating, an echelle grating, a plurality of Mach-Zehnder interferometers connected in a cascade fashion, a plurality of micro-rings connected in a cascade fashion, a plurality of Mach-Zehnder interferometers and a plurality of micro-rings connected in a cascade fashion, or a Fabry-Perot interferometer; and/or, the MDM Mux or the MDM Demux comprises a multimode interference coupler, a multimode adiabatic coupler, a bent coupler, a contra-directional coupler, a multi-waveguide coupling structure, an irregular multimode structure, a grating structure, a photonic crystal structure or a sub-wavelength structure; and/or, the PSR comprises a double-layer taper-shaped structure, a dual material structure, a bent structure, a multimode interference structure, or an adiabatic structure; and/or, the photodetector comprises a PIN diode, a metal-semiconductor-metal photodetector, or an avalanche photodiode; and/or, the MDM Demux and the PSR implement respective functions thereof in two independent structures, or implementing respective functions thereof by being integrated into a same structure.

9. A distributed computing system, **characterized by** comprising the optical I/O chip according to claim 1.

10. The distributed computing system according to claim 9, **characterized by** comprising a computing resource pool, a flash memory resource pool, and a storage resource pool arranged on a substrate; the computing resource pool comprises a plurality of computing units arranged in a first array, each of the computing units comprises a first laser source, a first photonic integrated circuit chip, a first electronic integrated circuit chip, and a computing resource chip; the flash memory resource pool comprises a plurality of flash memory cells arranged in a second array, each of the flash memory cells comprises a second laser source, a second photonic integrated circuit chip, a second electronic integrated circuit chip, and a flash memory resource chip; the storage resource pool comprises a plurality of storage units arranged in a third array, each of the storage units comprises a third laser source, a third photonic integrated circuit chip, a third electric integrated circuit chip, and a storage resource chip; each of the first photonic integrated circuit chip, the second photonic integrated circuit chip, and the third photonic integrated circuit chip has one of the optical I/O chip arranged respectively; the first photonic integrated circuit chip, the second photonic integrated circuit chip, and the third photonic integrated circuit chip, connected by an optical fiber, an optical waveguide, or a photonic wire bonding in between, acting as the optical transmission medium, are achieving an optical interconnection between the computing units, the flash memory units, and the storage units.
